# EUROPEAN PATENT APPLICATION

(11) **EP 1 561 637 A1**
(43) Date of publication of application: **10.08.2005**
(21) Application number: 05100725.0
(22) Date of filing: 02.02.2005
(51) Int. Cl.: B60P 3/10, B63C 13/00

(54) **Device for launching, hauling and ground handling of small vessels**

(30) Priority: 09.02.2004 IT GE20040007
(71) Applicant: Ottonello, Giovanni, 16122 Genova (IT)
(72) Inventor: Ottonello, Giovanni, 16122 Genova (IT)
(74) Representative: Buzzi, Franco

(57) **Abstract**

Device for launching, hauling and ground handling of vessels (B), comprising an amphibious self-propelled trolley (1) having a tracked frame (2) equipped with a lifting assembly (9), provided with supporting runners (10) for the vessel (B).

## Description

### Field of the invention

The present invention relates to the manipulation (launching, hauling, and ground handling) of watercraft and small pleasure boats and fishing boats, particularly in facilities provided with boat houses or sheds in which there are not available port installations or boatyard equipment, typically, beaches and stretches of sandy shore in the proximity of coastal communities, fishing villages, bathing establishments, and also erecting and careening yards, etc.

### State of the prior art

Traditionally, the operations of launching and hauling of vessels and watercraft in the situations described above are performed manually, by causing sliding of the keel of the vessel along a slipway prearranged where possible on the ground and duly lubricated with grease and the like. This requires, even for vessels of modest dimensions, the joint effort of a number of people, with evident expenditure in terms of energy and time.

The use of winches or capstans for the actuation of a cable hooked to the vessel enables a reduction in the physical effort of hauling or pushing of the boat, but entails considerable complications in terms of installation for the passage and return of the cable itself. In any case, the final operations of launching and re-housing of the vessel following upon haulage call in any case for manual manipulation of the vessel.

Another known system envisages the use, for each vessel, of a launching cradle mounted on wheels. This solution can be envisaged only for vessels of limited dimensions, and hence of low weight, to prevent sinking of the wheels of the trolley into the sand, so that manipulation of the trolley calls in any case for the intervention of a number of people for moving the launching cradle and for loading and unloading the vessel on and off the launching cradle.

On the other hand, for applications of this sort, it is not possible to envisage the use of equipment of the type normally available in port and shipyard environments, such as the mechanized launching cradle described in the U.S. patent No. US-4,915,577 or else the manipulator/elevator on rails described in the U.S. patent application No. US-2002/0176767, both on account of evident reasons of encumbrance and on account of the inaccessible costs in relation to the applications to which the invention refers.

Other solutions, such as trolleys on rubber wheels described in the U.S. patents Nos. US-6,341,793 and US-6,575,487, are unsuitable for use on beaches and sandy stretches, on account of the ease with which they sink into the sand or into the shore.

### Summary of the invention

The purpose of the present invention is to provide a device for launching, hauling and ground handling of vessels which has a simple and economic conformation, is provided with a high functional effectiveness, and can be manoeuvred conveniently in a practical and efficient way, even - albeit not exclusively - on sandy stretches, whether in the water or out of the water, by just one operator.

According to the invention, the above purpose is achieved thanks to a device for launching, hauling and handling of vessels, the main characteristic of which lies in the fact that it comprises an amphibious self-propelled trolley having a tracked frame equipped with a lifting assembly provided with supporting runners for the vessel.

The self-propelled trolley further conveniently comprises at least one orientable resting wheel, set at a distance from the tracks, which may number two or else four.

Driving of the trolley can be obtained with an internal-combustion engine or else an electric motor, by operation of the tracks by means of hydraulic motors, or more simply with mechanical drives. The lifting assembly is conveniently operated by means of telescopic hydraulic linear actuators, which can also be advantageously connected to a circuit for self-levelling of the runners, and hence of the vessel carried by the lifting assembly, both along the axis of pitching and along the axis of rolling thereof. Alternatively, the lifting assembly can be of a mechanical type.

Furthermore, the self-propelled trolley can be equipped with a device for blocking (either hydraulically or manually) the vessel for the purpose of ensuring the necessary stability thereof during its manipulation even on rough ground.

The device according to the invention can be conveniently used not only for launching, hauling and handling of vessels, but also inside boatyards for careening operations and dry-dock maintenance operations in general.

### Brief description of the drawings

The present invention will now be described in detail with reference to the annexed plate of drawings, which are provided purely by way of non-limiting example, and in which:
- Figure 1 is a schematic top plan view of a device according to a first embodiment of the invention;
- Figure 2 is a side elevation of the device of Figure 1;
- Figure 3 is a schematic top plan view of a second embodiment of the invention; and
- Figure 4 is a side elevation of the device of Figure 3.

### Detailed description of the invention

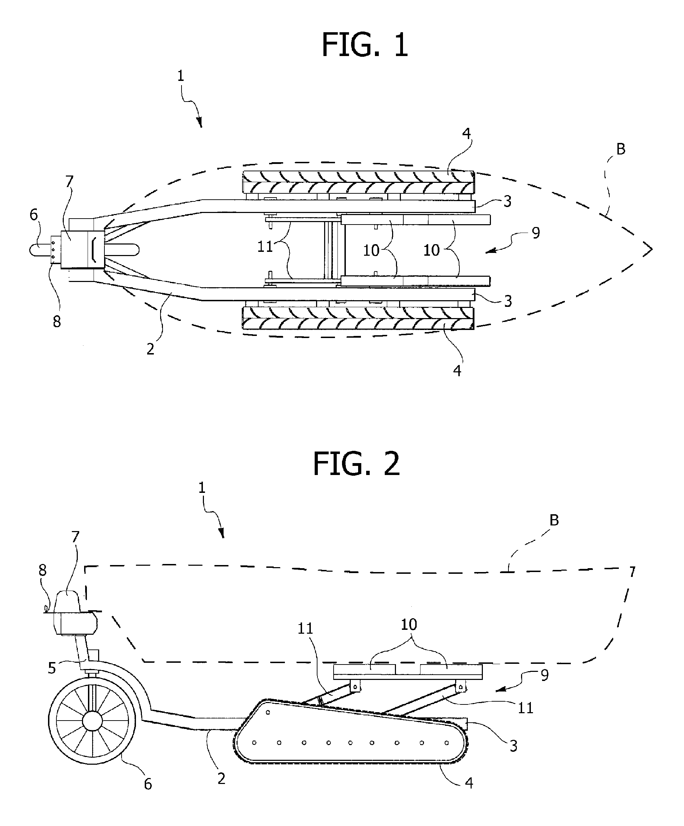

In one first possible embodiment represented in Figures 1 and 2, the device according to the invention consists of a self-propelled amphibious trolley 1 formed by a relatively light frame 2 with two horizontal arms 3, to each of which there is connected a respective motor-driven track 4.

The arms 3 of the frame 2 are joined at the rear to a vertical structure 5, which carries at the bottom an orientable wheel 6 and at the top an actuation and control assembly 7 including an internal-combustion engine or else an electric motor (with rechargeable accumulators associated thereto) for actuation of a pair of rotary hydraulic motors (not visible in the plate of drawings) for operation of the two tracks 4.

The control assembly 7 includes a control panel 8 that can be actuated by an operator on land. There is, however, envisaged a version of the device in which the trolley 1 is also equipped with a seat for the operator.

The wheel 6 is a wheel of large diameter, for example of the type commonly used on motorcycles.

The reference number 9 designates a lifting assembly carried by the arms 3 of the frame 2 and comprising supporting runners 10 that can be displaced vertically via articulated arms 11, which are, in turn, actuated via hydraulic actuators (not visible in the drawings) typically constituted by telescopic jacks that can be operated via the control panel 8 of the control assembly 7.

The supporting runners 10 define a launching cradle or launching ways for a vessel, indicated as a whole with a dashed line and designated by B in the plate of drawings, said cradle being designed to be manipulated by means of the trolley 1. Manipulation may include launching and hauling of the vessel B, via immersion of the arms 3 of the trolley 1 in the proximity of the bank of a marine basin, or lake or river basin and then lifting/lowering of the elevator assembly 9, as well as ground handling, maintaining the vessel B resting on said elevator assembly 9.

In order to improve stability of the vessel B during ground handling of the device even on sloping sandy terrain or in any case on rough ground, the end of the vessel B facing the part of the control assembly 7 may be anchored thereto by means of a hydraulic or manual clamping device, not illustrated in so far as it is within the reach of the person skilled in the branch. Furthermore, the stability of the trolley 1, which, already as it is, is more than satisfactory thanks to the three points of rest defined by the two tracks 4 and the orientable supporting wheel 6, may be further increased by connecting the hydraulic actuators of the lifting assembly 9 to a self-levelling circuit, thanks to which, through the possible differentiated interventions of said actuators, the supporting runners 10 will maintain the vessel B in a horizontal condition with respect both to the axis of rolling and to the axis of pitching.

The use of the two tracks 4, in conjunction with the orientable wheel 6 of large diameter, enables the trolley 1 to move conveniently on sandy terrain, rough terrain, and even on stony or rocky terrain with great ease and safety, enabling convenient manoeuvre even in narrow spaces. Of course, the tracks 4 and all the submersible parts of the trolley 1 will be appropriately protected and sealed for the purpose of ensuring the necessary water tightness of the corresponding mechanisms.

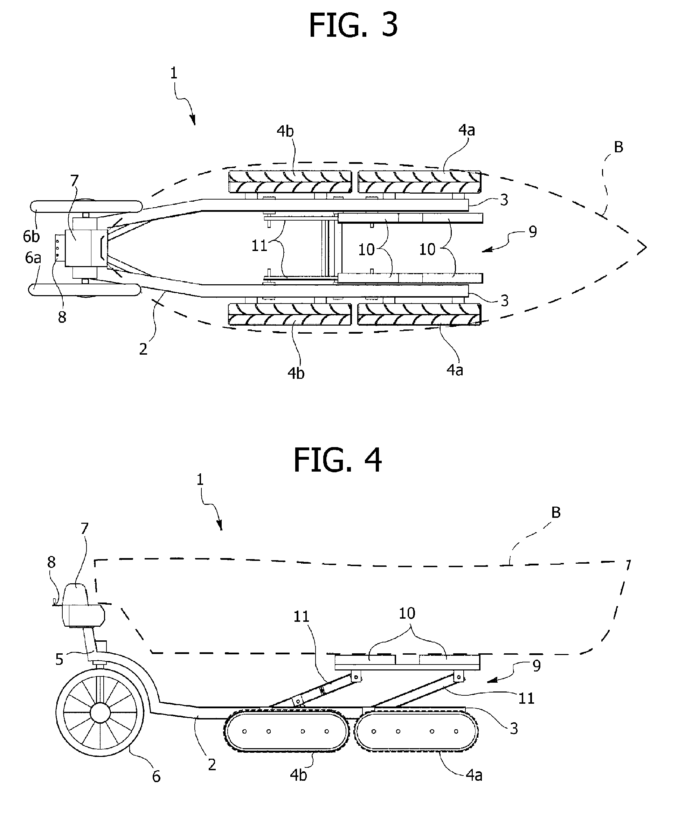

The variant of the device represented in Figures 3 and 4 is generally similar to the embodiment previously described, and consequently it will be described in detail only in so far as it differs therefrom, the same reference numbers being used for the parts that are identical or equivalent to the ones already described.

In said variant, two pairs of tracks 4a, 4b are envisaged, and the wheel 6 is replaced by a pair of orientable wheels 6a, which are also of large diameter. This arrangement enables a further increase in the stability and manoeuvrablity of the trolley 1.

Of course, the details of construction and the embodiments may vary widely with respect to what is described and illustrated herein, without thereby departing from the scope of the present invention as defined in the ensuing claims. Consequently, operation of the tracks 4 or 4a, 4b by the internal-combustion engine or electric motor may be obtained through a mechanical drive, and also the lifting assembly 9 may function with a mechanical actuation instead of a hydraulic one.

## Claims

1. A device for launching, hauling and ground handling of vessels (B), **characterized in that** it comprises an amphibious self-propelled trolley (1) having a tracked frame (2) equipped with a lifting assembly (9) provided with supporting runners (10) for a vessel (B).

2. The device according to Claim 1, **characterized in that** the trolley (1) is moreover equipped with at least one orientable resting wheel (6; 6a, 6b).

3. The device according to Claim 1 or Claim 2, **characterized in that** the trolley (1) is equipped with a pair of tracks (4).

4. The device according to Claim 1 or Claim 2, **characterized in that** the trolley (1) is equipped with two pairs of tracks (4a, 4b) .

5. The device according to any one of the preceding claims, **characterized in that** it includes an internal-combustion engine unit or electric motor for operation of hydraulic motors for controlling said tracks (6; 6a, 6b).

6. The device according to any one of the preceding claims, **characterized in that** said lifting assembly (9) includes hydraulic linear actuators (11).

7. The device according to Claim 6, **characterized in that** said hydraulic linear actuators are connected to a circuit for horizontal levelling of said runners (10).

8. The device according to any one of the preceding claims, **characterized in that** it is moreover equipped with a device for blocking the vessel (B) with respect to said trolley (1).
